Europäisches Patentamt

(19) European Patent Office

Office européen des brevets

(11) Numéro de publication: **0 267 119 B1**

(12) **FASCICULE DE BREVET EUROPEEN**

(45) Date de publication du fascicule du brevet:
**17.10.90**

(21) Numéro de dépôt: **87402493.8**

(22) Date de dépôt: **05.11.87**

(51) Int. Cl.⁵: **C03B 29/04**, C03B 23/03, C03B 23/035, C03B 27/04

(54) Installation de bombage/trempe pour la fabrication de vitrages plans ou bombés.

(30) Priorité: **06.11.86 FR 8615490**

(43) Date de publication de la demande:
**11.05.88 Bulletin 88/19**

(45) Mention de la délivrance du brevet:
**17.10.90 Bulletin 90/42**

(84) Etats contractants désignés:
**AT BE CH DE ES FR GB IT LI LU NL SE**

(56) Documents cités:
**FR-A- 2 085 464**
**US-A- 3 744 985**

(73) Titulaire: **SAINT-GOBAIN VITRAGE INTERNATIONAL, 18, avenue d'Alsace, F-92400 Courbevoie(FR)**

(72) Inventeur: **Colmon, Daniel, 8, rue François Mauriac, F-95130 Franconville(FR)**
Inventeur: **Mercier, Alain, 56 a, Boulevard de Saint-Denis, F-92400 Courbevoie(FR)**
Inventeur: **Parnet, Bernard, 10, rue du Maréchal Juin, F-60150 Thourotte(FR)**
Inventeur: **Bourelier, Jean-Claude, 98, Avenue de Saint-Mandé, F-75012 Paris(FR)**

(74) Mandataire: **Leconte, Jean-Gérard et al, SAINT-GOBAIN VITRAGE 39, Quai Lucien Lefranc, F-93300 AUBERVILLIERS(FR)**

## Description

La présente invention concerne une installation de bombage/trempe pour la fabrication de ou bien de vitrages plans trempés ou bien de vitrages bombés.

Il est connu lorsque l'on veut tremper des vitrages plans de chauffer lesdites vitrages à la température juste nécessaire pour la trempe, de sortir les vitrages plans du four qui a servi à les chauffer et de les soumettre le plus rapidement possible à l'action du fluide refroidisseur, qui est la plupart du temps de l'air.

Un temps d'arrêt ou un espace dans l'installation entre la sortie du four et le début de la trempe obligerait à surchauffer le verre dans le four, avec pour conséquences les défauts optiques du verre, les pertes d'énergie, etc., pour que ce verre en arrivant enfin à la trempe soit à une température suffisante.

Cependant pour la fabrication de petites séries de verres plans trempés, il peut être intéressant de pouvoir utiliser la partie chauffage et la partie trempe d'installations de bombage et de trempe de plaques de verre, au lieu d'installer une nouvelle ligne de trempe de verre plan ou de monopoliser une telle ligne déjà occupée par ailleurs.

La présente invention vise également à permettre l'utilisation d'éléments d'une installation de bombage/trempe donnée en vue de fabriquer des vitrages bombés dans une autre installation.

L'invention propose pour cela une installation de bombage/trempe pour la fabrication ou bien de vitrages plans trempés ou bien de vitrages bombés, du type comportant un four de réchauffage de verre, un espace apte à recevoir soit des outils de bombage soit des moyens de chauffage se substituant aux outils de bombage précités disposés au-dessus du convoyeur d'amenée des vitrages, un poste de trempe associé à l'espace précité et utilisé pour la fabrication de vitrages plans trempés et un dispositif de bombage puis de trempe associé à l'espace précité et utilisé pour la fabrication de vitrages bombés.

Avantageusement ces moyens de chauffage comportent une plaque chauffante, disposée au-dessus du convoyeur d'amenée, divisée en une pluralité de zones indépendantes. De préférence, cette plaque chauffante a le même combrement que les outils de bombage et se monte donc dans la même structure ou bâti que les outils de bombage.

Avantageusement encore, à cette plaque chauffante pouvant fournir un chauffage différencié suivant différentes zones, est associé un poste de trempe dans lequel les éléments de soufflage, en particulier caissons et buses, sont basculables et orientables.

L'invention sera maintenant décrite plus en détail en référence aux figures jointes qui représentent:

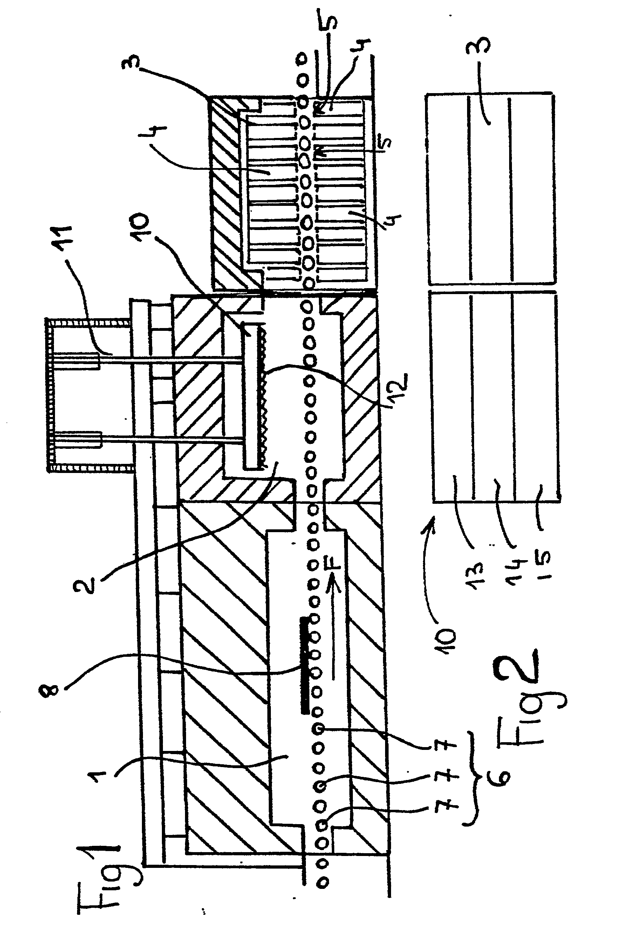

. figure 1: une vue schématique d'une installation de base sans dispositif de bombage annexe, qui ne fait pas partie de l'invention revendiquée,

. figure 2: une vue schématique en plan de l'installation selon la figure 1,

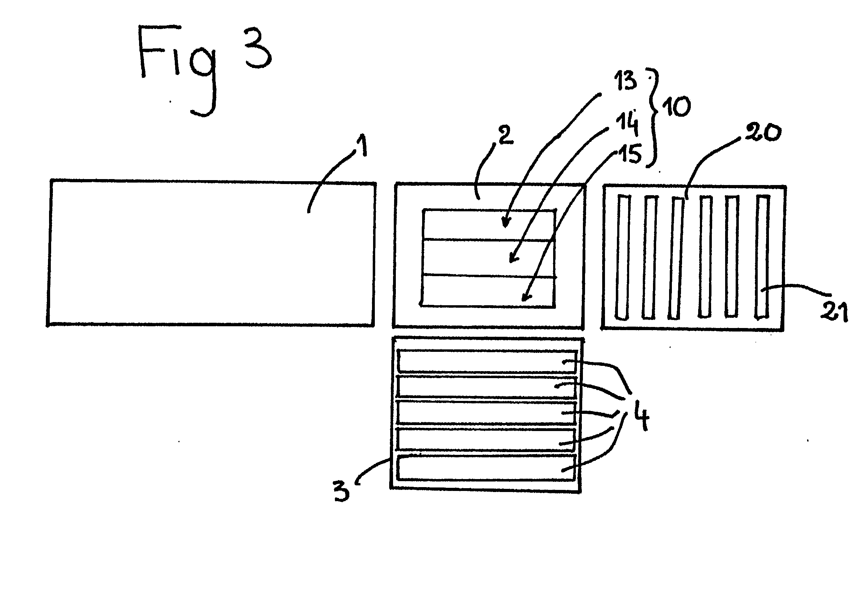

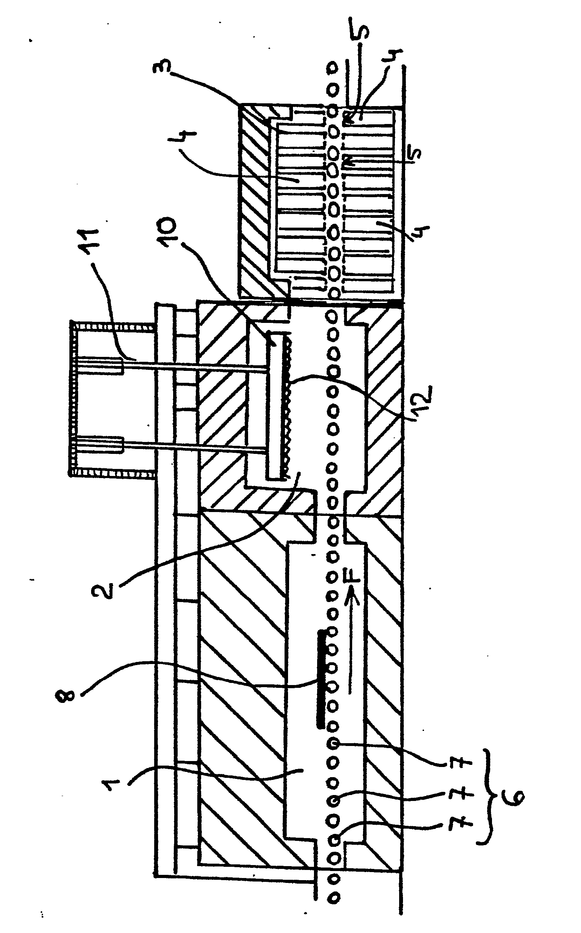

. figure 3: une vue schématique de l'implantation d'une installation de bombage-trempe selon l'invention.

L'installation de base représentée à la figure 1 comporte un four 1 de réchauffage du verre pour l'amener à sa température de trempe, un espace 2 dans lequel se situent les outils de bombage lorsque l'installation est employée pour réaliser des vitrages bombés et trempés, un poste de trempe 3 équipé de caissons de soufflage 4 libérant de l'air de trempe par une pluralité de buses 5. L'ensemble de ces installations est traversé par une onvoyeur 6 notamment à rouleaux 7 qui est chargé de transporter les feuilles de verre 8 à traiter aux différents postes de travail.

Les outils de bombage non représentés, mais normalement présents lorsque l'installation fabrique des vitrages bombés peuvent comporter un élément supérieur de transfert et dans certains cas de bombage, contre lequel est appliquée la plaque de verre à bomber et un élément inférieur de bombage et/ou de transfert qui prend en charge ladite plaque de verre après qu'elle ait été lachée par l'élément supérieur.

L'élément supérieur peut servir uniquement à prendre ou à rerevoir la plaque, pour dégager le convoyeur 6 et permettre l'entrée de l'élément inférieur qui est alors nécessairement un élément de bombage du type cadre à profil courbe ouvert en son centre. Cet élément inférieur étant en place, la plaque de verre maintenue par l'élément supérieur est lachée, elle tombe ou est disposée sur l'élément inférieur dont elle épouse la forme. Cet élément inférieur apporte généralement ensuite la plaque de verre au poste de trempe.

Dans certains cas l'élément supérieur peut ne pas être seulement un élément de transfert, il peut aussi être en forme, concave ou convexe, et servir à prébomber la plaque de verre qui acquérera son bombage définitif sur l'élément inférieur.

De tels outils de bombage sont par exemple décrits dans le brevet européen 3391.

Dans d'autre cas, l'élément supérieur est l'outil unique de bombage. C'est en étant appliqué contre lui que les plaques de verre se bombent totalement et définitivement. L'élément inférieur ne sert alors que d'élément de transfert chargé d'évacuer les plaques de verre bombées en dehors du poste de bombage, notamment vers le poste de trempe.

De tels outils de bombage sont décrits dans le document de brevet européen publié sous le n º 169770.

Dans beaucoup de cas, l'élément supérieur est monté mobile en hauteur au-dessus du convoyeur 6, notamment pour se rapprocher du convoyeur de façon à prendre en charge une plaque de verre, puis pour s'en éloigner pour laisser arriver l'élément inférieur qui peut être un cadre de bombage monté sur un chariot se déplaçant au-dessus des rouleaux 7 du convoyeur 6.

Dans l'installation modifiée selon l'invention, les outils de bombage constitués par les éléments supérieurs et inférieurs de bombage et/ou de transfert sont supprimés, mais la structure qui sert à maintenir l'élément supérieur de bombage et/ou de transfert d'une installation de bombage-trempe de base donnée peut être conservée. Les outils de bombage sont remplacés par des moyens de chauffage disposés au moins au-dessus du convoyeur 6. Ainsi par exemple, ils comprennent une plaque chauffante 10 disposée au-dessus du convoyeur 6. Cette plaque chauffante 10 est avantageusement montée pour être à hauteur réglable par rapport au convoyeur. Ainsi par exemple elle peut être portée par la structure globalement référencée 11 qui servait à maintenir l'élément supérieur de bombage et/ou de transfert dans l'installation de base donnée et les moyens de levage de l'élément supérieur de bombage et/ou de transfert enlevé, peuvent servir à faire varier la hauteur de ladite plaque 10.

Cette plaque 10 est chauffée par des résistances électriques ou des rampes à gaz représentées schématiquement en 12.

Avantageusement pour permettre une souplesse de fonctionnement de la nouvelle installation, ces moyens de chauffage 12 de la plaque 10 sont divisés en une pluralité de zones, par exemple trois zones 13, 14, 15 telles que montrées figure 2, juxtaposées dans la direction longitudinale d'avancement du convoyeur définie sur la figure par la flèche F, chaque zone étant alimentée indépendamment des autres zones. D'autres répartitions, transversales, ou transversales et longitudinales à la fois, sont également possibles. La différenciation du chauffage entre les différentes zones peut aussi être obtenue à l'aide de caches, de nature différente suivant les zones.

Cette pluralité de zones de chauffage permet d'obtenir si désiré une chauffe différenciée du verre ou de fournir au verre un complément de chauffage, différencié suivant les zones.

Egalement des moyens de chauffage peuvent être disposés sur les parois qui délimitent l'espace de bombage 2 et en particulier sur sa sole. Comme sur la plaque 10, la subdivision en zones distinctes des moyens de chauffage de la sole est possible.

Avantageusement lorsqu'il s'agit de fabriquer des vitrages plans trempés, pour permettre une souplesse de fonctionnement totale de l'installation, et/ou pour permettre de corriger l'anomalie dans la série des traitements auxquels est soumis le verre, constituée par l'absence de bombage et la sortie du four de réchauffage espacée par rapport au début de la trempe, le soufflage du poste de trempe est également constitué d'une pluralité de zones de soufflage indépendantes, indépendamment alimentées, et également indépendamment positionnables par rapport au verre, par exemple juxtaposées dans la direction longitudinale F comme montré dans la figure 2 ou dans la direction transversale.

Ainsi par exemple, le poste de trempe comporte une pluralité de caissons avec leurs buses associées, indépendamment positionnables et en particulier séparément orientables notamment par basculement.

Cette trempe modifiée par rapport à celle de l'installation de bombage-trempe permet d'apporter une correction au traitement de trempe initialement prévu pour des plaques de verre bombées reposant sur un chariot tel un cadre de bombage et ayant subi un traitement de bombage intermédiaire entre le chauffage et la trempe.

Cette trempe corrigée peut être mise en service seule lorsque l'opération de bombage est supprimée, mais elle peut aussi être mise en service conjointement avec un chauffage complémentaire à la place du bombage, ou encore le chauffage complémentaire seul peut suffire à rattraper la perturbation apportée par l'absence de bombage.

En outre, non seulement l'installation initiale de bombage et de trempe permet de fabriquer du verre plan trempé, mais ce verre plan trempé peut aussi posséder une trempe différenciée, suivant différentes zones de sa surface, cette trempe différenciée pouvant résulter d'une différenciation au niveau du chauffage et/ou au niveau du soufflage. Cette souplesse que l'on peut ainsi obtenir tant au niveau du chauffage qu'au niveau du soufflage permet d'ajuster au plus près de l'idéal les conditions de travail propres à chaque modèle de vitrage.

Lorsqu'il s'agit donc de tremper des feuilles de verre planes dans une telle installation, celles-ci sont d'abord chauffées dans le four, elles acquièrent un complément de chauffage uniforme sur la totalité de leur surface ou privilégié dans certaines régions de leur surface, ou voient leur température maintenue sous la plaque chauffante, puis elles poursuivent leur trajet sur le convoyeur dans le poste de trempe où elles subissent l'action du soufflage.

Grâce à la mobilité des caissons de soufflage, le poste de soufflage initialement prévu pour traiter des plaques de verre courbées portées sur un chariot, par exemple constitué par un cadre à profil courbe ouvert en son centre, peut être ajusté pour fournir les conditions de trempe nécessaires à une plaque plane, reposant sur les rouleaux du convoyeur.

Une telle installation modifiée par rapport à une installation de bombage/trempe de base donnée, peut également servir à alimenter en plaques de verre réchauffées un dispositif de bombage puis éventuellement de trempe différent de celui compris dans l'installation de bombage/trempe de base donnée.

Ainsi les plaques de verre réchauffées dans le four 1, traversent ensuite la zone de bombage 2 exempte d'outils de bombage mais comportant à la place des moyens de chauffage et en particulier la plaque chauffante 10, puis sont dégagées, latéralement ou en ligne c'est-à-dire en continuant leur trajet dans la même direction F sur un autre dispositif de bombage, puis éventuellement de trempe.

On peut ainsi fabriquer des plaques de verre bombées, puis éventuellement trempées suivant un mode et/ou un profil différents de ceux qu'aurait pu donner l'installation de base.

A titre d'exemple, à une installation de bombage-trempe de base ayant un four 1, un espace 2 prévu pour contenir ou recevoir des outils de bombage du type élément supérieur de bombage et/ou de transfert et élément inférieur d'évacuation et/ou de bombage tel un cadre à profil courbe ouvert en son centre, mais dans laquelle ces outils de bombage ont été supprimés pour être remplacés par des moyens de chauffage complémentaires comprenant notamment une plaque chauffante supérieure 10, on peut associer des dispositifs de bombage et de trempe 20 du type de ceux décrits dans les documents de brevet français n° 83.11955 (publié sous le n° 2 549 465) ou n° 86.13704. Dans de tels dispositifs de bombage et de trempe, les plaques de verre défilent à plat sur un lit de conformation, à profil courbe dans la direction de défilement, et à concavité tournée vers le haut. Le lit de conformation est constitué de rouleaux 21 rectilignes ou de rouleaux à profil courbe, ou encore de tiges cintrées orientables recouvertes de gaines tournantes décrites en détail dans les documents de brevets français publiés sous les n° 1 476 785, 92 064, 2 129 919, 2 144 523.

Ces dispositifs 20 de bombage et de trempe sont réputés pour leur aptitude à fournir des vitrages bombés de très bonne qualité, pour leur très grande capacité de production et pour leur faible coût.

Comme montré sur la figure 3, un tel dispositif 20 de bombage et de trempe constitué par un lit de conformation à profil courbe dans la direction de défilement du verre est avantageusement disposé dans le prolongement de l'installation de bombage-trempe de base avec espace de formage 2 apte à recevoir des éléments supérieur et inférieur de bombage et/ou de transfert ou d'évacuation.

Cependant une sortie latérale de l'espace 2 de formage de l'installation de base vers un dispositif de bombage-trempe à lit de conformation à profil courbe dans la direction de défilement est également possible. Mais dans ce cas, il y a la nécessité de remettre en place un convoyeur latéral supplémentaire pour transférer les plaques de verre de l'espace 2 vers le dispositif de bombage-trempe à lit de conformation à profil courbe, un tel convoyeur n'étant pas prévu dans l'installation de base puisque les plaques de verre sont normalement évacuées latéralement après bombage dans l'espace 2, sur un cadre à profil courbe, ouvert en son centre, monté sur chariot.

Au contraire dans le cas d'une sortie en ligne, c'est-à-dire dans la direction de défilement, il n'y a rien à ajouter.

Différents dispositifs de bombage-trempe avec lit de conformation ayant des rayons de courbure différents peuvent être prévus pour être installés à la suite de l'installation de base. Ou mieux un dispositif unique apte à être réglé suivant différents rayons de courbure, parmi lesquels un rayon infini peut être installé en sortie de l'installation de base.

Ainsi il devient possible en profitant du chauffage de l'installation de base, en profitant de la possibilité de fournir un chauffage complémentaire sur la totalité ou au contraire sur seulement certaines régions des plaques de verre dans la cellule 2 grâce notamment à la plaque chauffante 10, de fabriquer des plaques de verre planes, ou bombées dans une installation de bombage d'un autre type, ajoutée à la suite de l'installation de base.

Grâce à l'implantation montrée figure 3, pratiquement sans modification, sauf mettre en place ou démonter les outils de bombage dans l'espace 2 pour les remplacer par la plaque 10, on peut facilement à volonté, fabriquer des vitrages plans, bombés par la méthode utilisant l'élément supérieur et l'élément inférieur de bombage et/ou de transfert ou d'évacuation, bombés sur lit de conformation à profil courbe en renforçant éventuellement si besoin est le chauffage de certaines régions de plaques de verre.

## Revendications

1. Installation de bombage/trempe pour la fabrication ou bien de vitrages plans trempés ou bien de vitrages bombés, du type comportant un four (1) de réchauffage du verre, un espace (2) apte à recevoir soit des outils de bombage soit des moyens de chauffage se substituant aux outils de bombage précités disposés au-dessus du convoyeur d'amenée des vitrages, un poste de trempe (3) associé à l'espace (2) et utilisé pour la fabrication de vitrages plans trempés et un dispositif de bombage puis de trempe annexe (20) associé à l'espace (2) et utilisé pour la fabrication de vitrages bombés.

2. Installation de bombage-trempe selon la revendication 1, caractérisée en ce que lesdits moyens de chauffage comportent une plaque chauffante (10) disposée au-dessus du convoyeur d'amenée.

3. Installation selon l'une des revendications 1 ou 2, caractérisée en ce que le chauffage est divisé en une pluralité de zones indépendantes, notamment réparties dans la direction longitudinale d'avancement du convoyeur.

4. Installation selon les revendications 2 ou 3, caractérisée en ce que la plaque chauffante est montée mobile en hauteur sur la structure mobile en hauteur portant les éléments supérieurs de bombage et/ou de transfert de l'installation de base de bombage et de trempe de base.

5. Installation selon l'une des revendications précédentes, caractérisée en ce que le poste de trempe est divisé en zones indépendantes à soufflage individuellement réglable.

6. Installation selon la revendication 5, caractérisée en ce que les zones indépendantes du poste de trempe sont à position variable, notamment basculables.

7. Installation selon l'une des revendications précédentes, caractérisée en ce que le dispositif de bombage puis éventuellement de trempe annexe est un dispositif à lit de conformation à profil courbe dans la direction de progression des plaques de verre.

8. Installation selon l'une des revendications précédentes, caractérisée en ce que le dispositif de bombage puis éventuellement de trempe annexe est disposé en ligne.

9. Installation de bombage selon l'une des revendications précédentes, caractérisée en ce que les outils de bombage normalement présents dans l'espace (2) sont constitués d'un élément supérieur de transfert et éventuellement de bombage et d'un élément inférieur de bombage et/ou de transfert qui prend en charge la plaque de verre après qu'elle ait été lâchée par l'élément supérieur.

## Patentansprüche

1. Biege/Härtevorrichtung zur Herstellung von entweder planen vorgespannten Glasscheiben oder gewölbten Glasscheiben, mit einem Ofen (1) zum Wiederaufwärmen von Glas, einen zur Aufnahme entweder von Biegewerkzeugen oder einer Heizvorrichtung anstelle der genannten Biegewerkzeuge oberhalb einer Fördereinrichtung für Glasscheiben geeigneten Raum (2), eine dem Raum (2) zugeordnete und zur Herstellung von vorgespannten flachen Glasscheiben verwandte Härtungs- bzw. Vorspannungsstation (3) sowie eine dem Raum (2) zugeordnete und zur Herstellung von gewölbten Glasscheiben verwandte Vorrichtung zum Biegen mit anschließendem Abschrecken (20), aufweist.

2. Biege/Härtevorrichtung nach Anspruch 1, dadurch gekennzeichnet, daß die Heizvorrichtung eine oberhalb der Fördereinrichtung angeordnete Heizplatte (10) aufweist.

3. Vorrichtung nach einem der Ansprüche 1 oder 2, dadurch gekennzeichnet, daß die Heizung in eine Vielzahl von unabhängigen Zonen unterteilt ist, die insbesondere in Längsrichtung des Vorschubs der Fördereinrichtung verteilt sind.

4. Vorrichtung nach einem der Ansprüche 2 oder 3, dadurch gekennzeichnet, daß die Heizplatte in der Höhe beweglich über der in der Höhe beweglichen Struktur, die die oberen Biege- und/oder Transferelemente der Basis-Biege- und Härtevorrichtung trägt, angeordnet ist.

5. Vorrichtung nach einem der vorstehenden Ansprüche, dadurch gekennzeichnet, daß die Härtungsstation in individuell regelbare, unabhängige Blaszonen unterteilt ist.

6. Vorrichtung nach Anspruch 5, dadurch gekennzeichnet, daß die unabhängigen Zonen der Härtungsstation in veränderbarer Stellung angeordnet und insbesondere schwenkbar sind.

7. Vorrichtung nach einem der vorstehenden Ansprüche, da- durch gekennzeichnet, daß die Vorrichtung zum Biegen mit gegebenenfalls angeschlossener Härtung eine Vorrichtung mit einem Formbett mit in Richtung des Vorschubs der Glasplatten gewölbtem Profil ist.

8. Vorrichtung nach einem der vorstehenden Ansprüche, dadurch gekennzeichnet, daß die Vorrichtung zum Biegen mit gegebenenfalls angeschlossener Härtung geradlinig angeordnet ist.

9. Biegevorrichtung nach einem der vorstehenden Ansprüche, dadurch gekennzeichnet, daß die normalerweise im Raum (2) vorhandenen Biegewerkzeuge aus einem oberen Transfer- und gegebenenfalls Biegeelement und einem unteren Biege- und/oder Transferelement, das die Glasplatte, nachdem sie vom oberen Element freigegeben worden ist, übernimmt, gebildet sind.

## Claims

1. Bending/tempering installation for the production of tempered flat glass plates or bent glass plates, of the type incorporating a glass heating furnace (1), a space (2) able to receive either bending tools or heating means in place of the aforementioned bending tools located above the glas palte delivery conveyor, a tempering station (3) associated with the space (2) and used for the production of tempered flat glass plates and an auxiliary bending and then tempering means (20) associated with the space (2) and used for the production of bent glass plates.

2. Bending/tempering installation according to claim 1, characterized in that said heating means comprise a heating plate (10) positioned above the delivery conveyor.

3. Installation according to one of the claims 1 or 2, characterized in that the heating furnace is subdivided into a plurality of independent zones, distributed in the longitudinal advance direction of the conveyor.

4. Installation according to claims 2 or 3, characterized in that the heating plate is mounted in vertically mobile manner on the vertically mobile structure carrying the upper bending and/or transfer members of the basic bending and tempering installation.

5. Installation according to one of the preceding claims, characterized in that the tempering station is subdivided into independent zones with individually regulatable blowing.

6. Installation according to claim 5, characterized in that the position of the independent zones of the tempering station can be varied and in particular tilted.

7. Installation according to one of the preceding claims, characterized in that the auxiliary bending and optionally tempering means is a curved profile shaping bed means in the glass plate advance direction.

8. Installation according to one of the preceding claims, characterized in that the auxiliary bending and optionally tempering means is arranged in linear manner.

9. Bending installation according to one of the present in space (2) are constituted by an upper transfer and optionally bending member and a lower bending and/or transfer member taking up the glass plate after it has been released by the upper member.

EP 0 267 119 B1

Fig1

8

2

11

1

10

3

4

F

7 7 7

6

12

4

4

5

4

5

Fig2

10

13

14

15

3

Fig 3